# EUROPÄISCHE PATENTSCHRIFT

(11) **EP 1 639 877 B1**
(45) Veröffentlichungstag und Bekanntmachung des Hinweises auf die Patenterteilung: **03.12.2008**
(21) Anmeldenummer: 05020978.2
(22) Anmeldetag: 23.09.2005
(51) Int. Cl.: A01B 45/02

(54) **Vorrichtung zum Zerkleinern und Verdichten des aufgenommenen Gutes beim Vertikutieren**
Device for cutting and compacting picked-up material during scarifying
Appareil pour le compactage et le broyage des matériaux ramassés par un scarificateur

(30) Priorität: 23.09.2004 DE 102004046525; 24.07.2005 DE 102005035125
(43) Veröffentlichungstag der Anmeldung: 29.03.2006
(73) Patentinhaber: Wolf-Garten GmbH & Co. KG, 57518 Betzdorf (DE)
(72) Erfinder: Eggenmüller, Alfred, Dr.-Ing., 89275 Elchingen (DE)
(74) Vertreter: Koch, Günther

(56) Entgegenhaltungen:
- WO-A-03/053133
- DE-A1- 3 835 570
- DE-A1- 3 837 937
- DE-A1- 19 645 804
- US-A- 4 905 460
- US-B1- 6 347 593
- WOLF-GERÄTE VERTRIEBS AG: WOLF-GERÄTE-KATALOG SAISON 1990, 1990, Seiten 68-69,

## Beschreibung

Die Erfindung bezieht sich auf ein Vertikutiergerät der im Oberbegriff des Patentanspruchs 1 angegebenen Gattung. Ein derartiges Vertikutiergerät, bei dem das Volumen des Vertikutiergutes durch Zerkleinerung und Pressung vermindert wird, ist aus der DE 38 35 570 A1 bekannt. Hierbei erfolgt die Zerkleinerung und Pressung des Vertikutiergutes durch einen der Vertikutierwalze nachgeschalteten gesonderten Zinkenrotor, der einen eigenen Antrieb über eine zweite Antriebswelle erfordert, so dass der Aufbau einen erheblichen Raumbedarf benötigt. Für einen Gartenbetrieb ist ein derartiges Gerät daher praktisch nicht einsetzbar.

Es ist weiter durch die DE 196 45 804 A1 ein Gerät zum Einmulchen und/oder Aufsammeln von Laub und/oder Rasenschnitt bekannt, welches zum Betrieb einen Traktor erfordert, dessen Zapfwelle die mit rotierenden Messern bestückte Messerwalze antreibt. Das zerkleinerte Gut wird entweder auf dem Boden abgelegt oder in einem Behälter gesammelt. Auch dieses Gerät ist für den Gartenbetrieb nicht geeignet.

Der Erfindung liegt die Aufgabe zugrunde, ein kompakt und einfach aufgebautes Gerät zum Vertikutieren und zum Zerkleinern und Verdichten des Vertikutiergutes zu schaffen. Gelöst wird die gestellte Aufgabe durch die im Kennzeichnungsteil des Patentanspruchs 1 angegebenen Merkmale. Das gemäß der Erfindung ausgebildete Vertikutiergerät erfordert keinen zusätzlichen maschinellen Aufbau für die Zerkleinerung und Pressung des Vertikutiergutes, weil die Vertikutiermesser die Zerkleinerung und Verdichtung des Vertikutiergutes selbst bewirken, so dass kein zusätzlicher Raumbedarf erforderlich ist.

Durch die US-PS 4 905 460 ist ein Gerät zum Mulchen bekannt, bei dem eine mit Messern bestückte Walze zum Belüften von Rasenfeldern vorgesehen ist, die ähnlich einem Vertikutiergerät ausgebildet ist und mit einer Abstreifvorrichtung für die Messer zusammenwirkt, wodurch eine Zerkleinerung, aber keine Verdichtung des bearbeiteten Gutes zustandekommt. Auch dieses Gerät ist nur in Verbindung mit einem Traktor anwendbar.

Das Vertikutiergerät nach der Erfindung kann als Arbeitswerkzeuge in bekannter Weise starre Messer aufweisen, so dass bei entsprechender Ausbildung und Anordnung die für die Erfindung bestimmende Zusammenlegung der Arbeits- und Presswerkzeuge möglich wird.

Die einzelnen Messer sind in ihrer Arbeitsseite so geformt, dass ihre Spitzen die Arbeitsaufgabe im Rasen erfüllen und den Gras- und Unkrautfilz auf- und abreißen und hochschleudern. Beim Durchgang der Messerspitzen durch einen Rillenmantel an der Unterseite eines Presskanals wird das aufgenommene Gut zerrissen und zerquetscht. Anschließend wird das mitgenommene Gut durch einen Abstreifkorb abgestreift und in einen Presskanal gedrückt.

Da sich dort schon eingepresstes Gut befindet, erfolgt beim Einpressen eine weitere zerkleinernde und zerdrückende Behandlung, was für eine später vorgesehene Verwendung als Kompost die Verrottung trotz der Verdichtung begünstigt.

Für eine optimale Einpressung und Förderung in einen Behälter oder Sack müssen Messerform, Abstreifkorb und Presskanal aufeinander abgestimmt werden.
Die Arbeitsseite der Messer ist wegen ihrer Arbeitsaufgabe im Rasen radial ausgerichtet. Für ein einwandfreies Abstreifen muss daher der Abstreifkorb stark gekrümmt sein, wobei der Winkel zwischen Arbeitsseite der Messer und dem Rillenkorb in Bereich von 90° liegen soll.
Die stark gekrümmten Abstreifleisten müssen an ihrem unteren Ende tangential an die Distanzstücke der Vertikutierwalze anschließen. Vorteilhaft für ihre Abstreifwirkung ist die Anordnung von seitlichen Stützflächen.
Für die Gestaltung der Messer ist die Lage ihrer Arbeitsfläche zum Wellendrehpunkt besonders wichtig. Einerseits muss die wirksame Messerseite beim Durchgang durch die Bodenoberfläche relativ senkrecht stehen, um das Gut wirksam aufzugreifen und nach oben zu transportieren, andererseits muss beim Durchgang durch den Abstreifkorb das Gut abgestreift und in den Presskanal gedrückt werden.
Ein optimaler Kompromiss wird erreicht, wenn die Arbeitsfläche der Messer tangential zu einem relativ großen Kreis um den Drehpunkt liegt. Die Größe des Kreises ist mit der Krümmung des Abstreifkorbes abzustimmen.
Mitnahme und Abstreifen verbessern sich bei dickeren Messern. Für den Arbeitserfolg im Boden reichen 2 - 3 num für das Abstreifen wären 3 - 5 mm vorteilhaft.
Eine zu große Teilung nach der Seite ist für die Mitnahme und das Einpressen nachteilig. Je geringer der Abstand von benachbarten Messern auf der Vertikutierwalze ist, umso größer ist ihre Presswirkung. Um den gleichen Arbeitseffekt zu erzielen und den Leistungsbedarf in Grenzen zu halten kann dies durch die Anordnung von Halbmessern erreicht werden. Der Abstand halbiert sich, bei gleicher Anzahl Einschläge.
Vertikutierer ohne Presseinrichtung müssen das aufgenommene und nicht verdichtete Gut in einen großen Behälter weit nach hinten werfen. Das ist bei Anordnung einer Presseinrichtung nicht notwendig, da der Behälter kleiner ausfallen kann und das Gut nach hinten gedrückt wird. Die Drehzahl der Messerwelle kann dadurch halbiert werden: von ca. 3500 auf ca. 1500. Der dabei gewonnene Leistungsbedarf wird für das höhere Drehmoment der Verdichtungsleistung benötigt.

Ein gutes Entleeren des Presskanals am Ende der Arbeit wird ermöglicht, wenn das Mundstück des Behälters oder des Sackhalters weit in den Presskanal hineinreicht und entsprechend seinem Formverlauf zur Entleerung oder Sackabnahme geöffnet werden kann.

Eine vorteilhafte Lösung für den Einsatz mit Behälter oder wahlweise Sackbefüllung ergibt sich bei Ausbildung des Sackhalters als Vorderteil des Behälters.

Am unteren Teil der Kanalbegrenzung kann durch Anordnung von Rillen, durch die die Zinkenspitzen laufen, eine starke Zerkleinerung erreicht werden. Im Normalfall reicht eine nach oben gekrümmte Oberfläche, an die kurz dahinter das Mundstück des Sackhalters, unter Umständen in fortlaufender Wölbung, sich anschließt. Werden nur Säcke abgefüllt, so ist eine Sackwanne anzuordnen. In der Kombination Sack und Behälter kann der Behälter bei abnehmbarem Oberteil zum Tragen des Sackes ausgebildet werden.

Das unter Umständen nicht abgestreifte Gut an den Zinken sollte durch eine an den Zinkenspitzen eng gehaltene und vorne weit nach unten gezogene Abdeckung der Vertikutierwalze wieder in den Aufnahmeprozess zurück geführt werden.

Die Anpassung an unterschiedliche Arbeitsbedingungen und den gewünschten Arbeitserfolg erfolgt durch Verändern der Presskanalweite. Bei feuchten Verhältnissen kann ein weiter Presskanal notwendig sein, besonders wenn die Verdichtung nicht hoch sein sollte. Ein enger Presskanal hat eine hohe Verdichtung aber auch einen höheren Leistungsbedarf zu Folge.

Die Veränderung der Presskanalweite kann durch Verstellung der oberen Kanalbegrenzung, den Abstreifer, oder der unteren Kanalbegrenzung, dem Einlauf erfolgen.
Bei letzteren ist eine einfache und schnelle Verstellung durch ein dreh- und feststellbares Leitblech möglich.

Die Erfindung ist in einem Ausführungsbeispiel in der Zeichnung dargestellt, die in nachfolgender Beschreibung näher erläutert wird.
Es zeigen
Fig. 1 eine Vertikutierwalze mit Presskanal und Behälter in Seitenansicht,
Fig. 2 eine Draufsicht auf eine Vertikutierwalze mit Doppelmessern und weitem Abstreifkorb,
Fig. 3 eine Draufsicht auf eine Vertikutierwalze mit Einfachmessern und engem Abstreifkorb.
Fig. 4 eine Seitenansicht einer Ausführung mit optimierten Parametern.
Fig. 5 die Verstellung der Presskanalweite durch verschwenken des Abstreifers und
Fig. 6 die Verstellung der Presskanalweite durch eine schwenk- und feststellbares Leitblech.

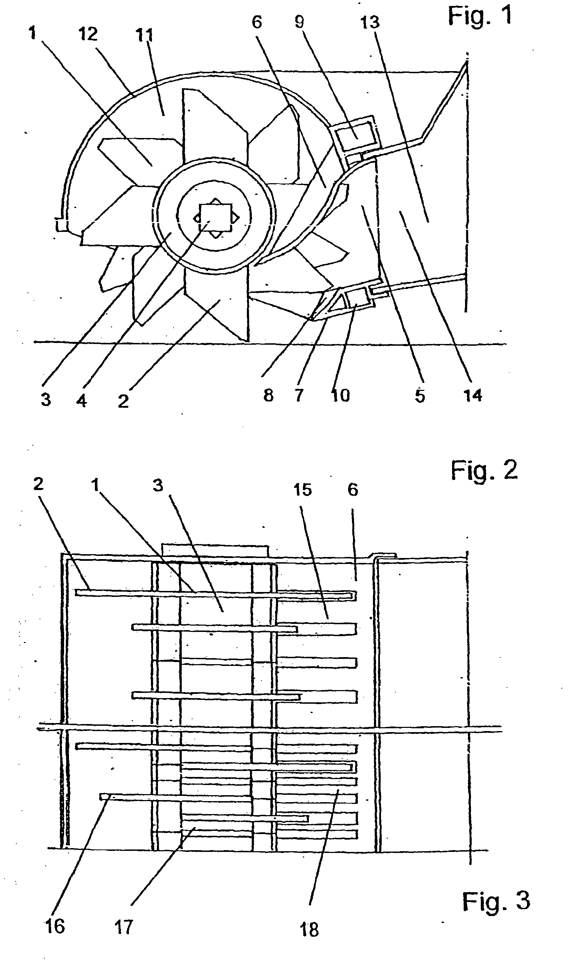

In **Fig.1** setzt sich die Vertikutierwalze 1 aus den Doppelmessern 2, den Zwischenstücken 3 und der Vierkantwelle 4 zusammen. Der Presskanal 5 wird an seiner Oberseite durch den Abstreifkorb 6 und an seiner Unterseite durch den Einlauf 7 gebildet, der mit Rillen 8 versehen ist.
Der Abstreifkorb 6 ist an der Querstrebe 9, der Einlauf 7 an der Querstrebe 10 befestigt, beide stützen sich auf den Seitenwänden 11 des Gehäuses 12 ab.
Der Behälter 13 ist mit seinem als Kanalverlängerung ausgebildeten Mundstück 14 am Presskanal 5 angeschlossen.

In **Fig. 2** sind die Doppelmesser 2 mit den Zwischenstücken 3 auf der Vertikutierwalze 1 im üblichen Abstand nebeneinander angeordnet. Der Abstreifkorb 6 hat breite Abstreifleisten 15.

In **Fig. 3** sind die Einzelmesser 16 im engen Abstand und in doppelter Anzahl durch kurze Zwischenstücke 17 nebeneinander angeordnet. Dadurch ergeben sich schmale Abstreifleisten 18.

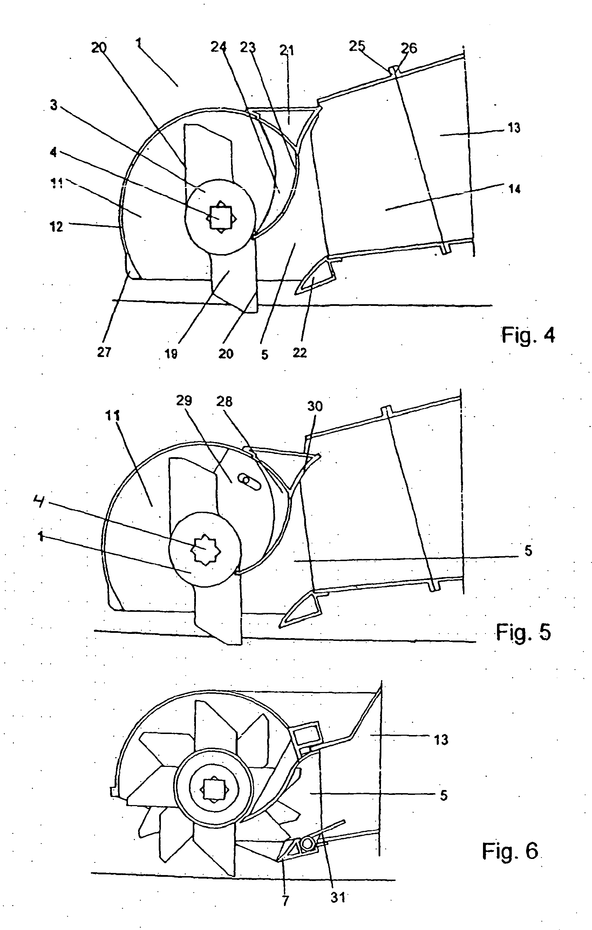

In **Fig. 4** setzt sich die Vertikutierwalze 1 aus den Vorsatzmessern 19, deren Arbeitsflächen 20 zur Verbesserung des Abstreifens nach vorne gezogen ist, den Zwischenstücken 3 und der Vierkantwelle 4 zusammen. Der Presskanal 5 wird an seiner Oberseite durch Abstreifkorb 21 und an seiner Unterseite durch den gewölbten Einlauf 22 gebildet. Beide sind selbst tragend und mit Flanschen direkt an den Seitenwänden 11 des Gehäuses 12 befestigt.
Die Abstreifleiste 23 hat zur Verstfirkung zwei Seitenflächen 24, die auch zur Freihaltung des Zwischenraumes zwischen den einzelnen Abstreifleisten dienen.

Der Behälter 13 ist mit seinem als Kanalverlängerung ausgebildeten Mundstück 14 am Presskanal 5 eingehängt. Am Mundstück 14 ist der Flansch 25 als Sackhalter ausgebildet. An ihn kann direkt ein Sack aufgefädelt und mit einem Schnurring festgemacht werden. Für die Halterung des Sackes während des Füllvorganges muss eine Sackwanne angeordnet werden.
Wird der Behälter 13 auch als Sackhalter benützt, so muss vor seinem Anschluss an das Mundstück 14 der Sack in den Behälter gelegt und mit seiner Öffnung am Flansch 26 durch einen Schnurring befestigt werden.
Zur besseren Rückftihrung des geringfügig mitgenommenen Gutes, besonders am Rasenrand, ist das Gehäuse 12 an seiner Vorderkante so tief wie möglich nach unten gezogen und dort mit einer Verstärkungsleiste 27 versehen.

In **Fig. 5** ist der Abstreifkorb 28 mit seinen Befestigungsflanschen 29 an der Seitenwand 11 über Langlöcher verstellbar befestigt. Um den Abstand des Abstreifers 28 an der Unterseite des Vertikutierwalze 1 konstant zu halten, erfolgt die Verdrehung um das Zentrum der Vierkantwelle 4. Die Verringerung der Weite des Presskanals 15 erfolgt durch die Veränderung der Lage der Leitfläche 30.

In **Fig. 6** erfolgt die Veränderung der Weite des Presskanals 5 durch Verschwenken des am Einlauf 7 dreh- und feststellbar angeordneten Leitbleches 31.
Wird diese Einrichtung als Schnellverstellung ausgebildet, kann sie durch Hochschwenken zu Beginn der Befüllung einen schnelleren Gegendruck erzeugen.
Andererseits wird die Entnahme des Behälters 13 durch Abschwenken erleichtert.

### Bezugszeichenliste

- 1: Vertikutierwalze
- 2: Doppelmesser
- 3: Zwischenstück
- 4: Vierkantwelle
- 5: Presskanal
- 6: Abstreifkorb
- 7: Einlauf
- 8: Rillen
- 9: Querstrebe
- 10: Querstrebe
- 11: Seitenwände
- 12: Gehäuse
- 13: Behälter
- 14: Mundstück
- 15: Abstreifleisten, breit
- 16: Halbmesser
- 17: Zwischenstück, kurz
- 18: Abstreifleisten, schmal
- 19: Versatzmesser
- 20: Arbeitsfläche
- 21: Abstreifkorb
- 22: Einlauf, gewölbt
- 23: Abstreifleiste
- 24: Seitenfläche
- 25: Flansch, Mundstück
- 26: Flansch, Behälter
- 27: Verstärkungsleiste
- 28: Abstreifkorb
- 29: Befestigungsflansch
- 30: Leitfläche
- 31: Leitblech

## Patentansprüche

1. Vertikutiergerät mit einer die Vertikutiermesser (2) tragenden mit horizontaler Achse angeordneten Vertikutierwalze (1) und mit einem Presskanal (5) für das Vertikutiergut, an den ein Behälter (13) angeschlossen ist, wobei die obere Kanalbegrenzung des Presskanals (5) als Abstreifkorb (6) ausgebildet ist, der beim Durchgang der Zinken eines Zinkenrotors das Vertikutiergut abstreift und in den Presskanal drückt,
**dadurch gekennzeichnet, dass** der Presskanal (5) eine untere Kanalbegrenzung aufweist, die als Einlauf (7) unmittelbar über der Bodenoberfläche ausgebildet ist, und dass der Zinkenrotor von der Vertikutierwalze (1) gebildet ist, deren Vertikutiermesser (2; 16) durch die als Abstreifkorb (6) ausgebildete obere Kanalbegrenzung hindurchgehen.

2. Vertikutiergerät nach Anspruch 1,
**dadurch gekennzeichnet, dass** der Abstreifkorb (6) stark gekrümmte Abstreifleisten (15, 18) aufweist, deren unteres Ende sich tangential an Zwischenstücke (3) der Vertikutierwalze (1) anschließt.

3. Vertikutiergerät nach Anspruch 2,
**dadurch gekennzeichnet, dass** die Abstreifleisten (15, 18) seitlich angeordnete Stützflächen (24) aufweisen.

4. Vertikutiergerät nach Anspruch 1,
**dadurch gekennzeichnet, dass** die Vertikutiermesser als starre Doppelmesser (2) oder Halbmesser (16) auf der Vertikutierwalze (1) gegeneinander versetzt angeordnet sind und die Vorderseite der Vertikutiermesser annähernd gerade ausgebildet ist und tangential zu einem Kerndurchmesser verläuft.

5. Vertikutiergerät nach Anspruch 1,
**dadurch gekennzeichnet, dass** die Weite des Presskanals (5) durch verstellbar angeordnete Leitflächen (30, 31) veränderbar ist.

6. Vertikutiergerät nach Anspruch 5,
**dadurch gekennzeichnet, dass** am Anschluss an die untere Kanalbegrenzung am Einlauf (7) eine verstellbare Leitfläche (30) angeordnet ist.

7. Vertikutiergerät nach Anspruch 5,
**dadurch gekennzeichnet, dass** die Veränderung der Weite des Presskanals durch Verschwenken eines am Einlauf (7) dreh- und feststellbar angeordneten Leitbleches (31) erfolgt.

8. Vertikutiergerät nach Anspruch 1,
**dadurch gekennzeichnet, dass** am Presskanal (5) der Behälter (13) mit einem als Kanalverlängerung ausgebildeten Mundstück (14) angeschlossen ist.

9. Vertikutiergerät nach Anspruch 1,
**dadurch gekennzeichnet, dass** die Vertikutierwalze (1) mit einer Drehzahl zwischen 1200 und 2000 U/min umläuft.

10. Vertikutiergerät nach Anspruch 1,
**dadurch gekennzeichnet, dass** das Gehäuse (12) der Vertikutierwalze (1) mit geringem Abstand von den Messerspitzen angeordnet und an seiner Vorderseite tief nach unten gezogen ist.

11. Vertikutiergerät nach Anspruch 4,
**dadurch gekennzeichnet, dass** die Doppel- oder Halbmesser eine Dicke von 2 bis 5 mm aufweisen.

## Claims

1. A verticuting device having a verticuting roller (1) carrying a verticuting blade (2) and arranged with its axis horizontal, and a pressing passage (5) for the verticuting material, to which a container (13) is connected, wherein the upper passage boundary of the pressing passage (5) is in the form of a stripping basket (6) which upon the passage of the tines of a tine rotor strips off the verticuting material and presses it into the pressing passage,
**characterised in that** the pressing passage (5) has a lower passage boundary which is in the form of an intake (7) immediately above the ground surface and that the tine rotor is formed by the verticuting roller (1), the verticuting blades (2; 16) of which pass through the upper passage boundary which is in the form of the stripping basket (6).

2. A verticuting device according to claim 1 **characterised in that** the stripping basket (6) has greatly curved stripping bars (15, 18), the lower end of which tangentially adjoins intermediate portions (3) of the verticuting roller (1).

3. A verticuting device according to claim 2 **characterised in that** the stripping bars (15, 18) have laterally arranged support surfaces (24).

4. A verticuting device according to claim 1 **characterised in that** the verticuting blades are arranged in mutually displaced relationship in the form of rigid double blades (2) or half-blades (16) on the verticuting roller (1) and the front side of the verticuting blades is approximately straight and extends tangentially relative to a core diameter.

5. A verticuting device according to claim 1 **characterised in that** the width of the pressing passage (5) is variable by displaceably arranged guide surfaces (30, 31).

6. A verticuting device according to claim 5 **characterised in that** a displaceable guide surface (30) is arranged in adjacent relationship to the lower passage boundary at the intake (7).

7. A verticuting device according to claim 5 **characterised in that** the change in the width of the pressing passage is effected by pivoting a guide plate (31) arranged rotatably and fixably at the intake (7).

8. A verticuting device according to claim 1 **characterised in that** the container (13) is connected to the pressing passage (5) with a mouthpiece (14) in the form of a passage prolongation.

9. A verticuting device according to claim 1 **characterised in that** the verticuting roller (1) rotates at a rotary speed of between 1200 and 2000 rpm.

10. A verticuting device according to claim 1 **characterised in that** the housing (12) of the verticuting roller (1) is arranged at a small spacing from the blade tips and is extended deep downwardly at its front side.

11. A verticuting device according to claim 4 **characterised in that** the double blades or half-blades are of a thickness of 2 to 5 mm.

## Revendications

1. Scarificateur, avec un rouleau de scarification (1) portant les lames de scarification (2) et disposé avec son axe horizontal, et avec un conduit de pressage (5) pour les matériaux ramassés par le scarificateur, auquel est raccordé un récipient (13), sachant que la délimitation supérieure du conduit de pressage (5) est réalisée en tant que panier racleur (6) qui racle le matériau scarifié lors de son passage à travers les dents d'un rotor à dents et le presse dans le conduit de pressage,
**caractérisé en ce que** le conduit de pressage (5) présente une délimitation inférieure de conduit qui est réalisée en tant que admission (7) juste ou directement au-dessus de la surface de fond, et **en ce que** le rotor à dents est formé par le rouleau de scarification (1), dont les lames de sacrification (2 ; 16) passent à travers la délimitation supérieure de conduit réalisée en tant que panier racleur (6).

2. Scarificateur selon la revendication 1, **caractérisé en ce que** le panier racleur (6) présente des barrettes racleuses (15, 18) fortement incurvées, dont l'extrémité inférieure se raccorde tangentiellement à des pièces intermédiaires (3) du rouleau de scarification (1).

3. Scarificateur selon la revendication 2, **caractérisé en ce que** les barrettes racleuses (15, 18) présentent des faces d'appui (24) disposées latéralement.

4. Scarificateur selon la revendication 1, **caractérisé en ce que** les lames de sacrification sont disposées sur le rouleau de scarification (1) en décalage mutuel sous la forme de demi-lames (16) ou de lames doubles (2) rigides, et le côté avant des lames de sacrification est réalisé approximativement rectiligne et s'étend tangentiellement à un diamètre de partie centrale.

5. Scarificateur selon la revendication 1, **caractérisé en ce que** la largeur de passage du conduit de pressage (5) peut être modifiée par des surfaces de guidage (30, 31) disposées à déplacement.

6. Scarificateur selon la revendication 5, **caractérisé en ce qu'**une surface de guidage réglable (30) est disposée au niveau du raccordement à la délimitation inférieure de conduit à l'admission (7).

7. Scarificateur selon la revendication 5, **caractérisé en ce que** la modification de la largeur de passage du conduit de pressage s'effectue en faisant pivoter une tôle de guidage (31) disposée au niveau de l'admission (7) avec possibilité de rotation et d'immobilisation.

8. Scarificateur selon la revendication 1, **caractérisé en ce que** le récipient (13) est raccordé au conduit de pressage (5) par un embout (14) réalisé sous forme de prolongement de conduit.

9. Scarificateur selon la revendication 1, **caractérisé en ce que** le rouleau de scarification (1) tourne à une vitesse de rotation comprise entre 1200 et 2000 tr/min.

10. Scarificateur selon la revendication 1, **caractérisé en ce que** le boîtier (12) du rouleau de scarification (1) est disposé à faible distance des pointes de lames et est déployé loin vers le bas sur son côté avant.

11. Scarificateur selon la revendication 4, **caractérisé en ce que** les demi-lames ou lames doubles présentent une épaisseur de 2 à 5 mm.
